# EUROPEAN PATENT APPLICATION

(11) **EP 4 811 585 A1**
(43) Date of publication of application: **23.09.2026**
(21) Application number: 26164897.6
(22) Date of filing: 16.03.2026
(51) Int. Cl.: H02J 3/007

(54) **POWER SUPPLY CIRCUIT, POWER SUPPLY DEVICE, AND POWER SUPPLY SYSTEM**

(30) Priority: 17.03.2025 CN 202510320929
(71) Applicant: Shanghai Sigeyuan Intelligent Technology Co., Ltd, Shanghai 201306 (CN)
(72) Inventor: ZHOU, Tao, Shanghai 201306 (CN); WANG, Kangyu, Shanghai 201306 (CN)
(74) Representative: Di Bernardo, Antonio

(57) **Abstract**

Provided are a power supply circuit, a power supply device, and a power supply system, which belong to the field of power supply technologies. The power supply circuit includes: a bus; a first branch having a first end electrically connected to the bus, and a second end electrically connected to a first port; a second branch having a first end electrically connected to the bus, and a second end electrically connected to a second port; a plurality of third branches, each of the plurality of third branches having a first end electrically connected to the bus, and a second end electrically connected to a corresponding one of power ports, and each of the plurality of third branches being provided with a first switch; and a control circuit connected to a drive terminal of the first switch, the control circuit being configured to control the first switch to be turned on or off. Each of the first port and the second port is configured to be connected to a load or an inverter. Each of the power ports is configured to be connected to a power grid or a power source. Therefore, a supply power of the power supply circuit can be increased to meet a power demand of the load.

## Description

### FIELD

The present disclosure relates to the field of power supply technologies, and more particularly, to a power supply circuit, a power supply device, and a power supply system.

### BACKGROUND

The load capacity of a photovoltaic inverter system is generally limited by a hardware port and line properties. When a power required by the connected load exceeds a maximum power allowed to be transmitted by a branch circuit where the connected load is located, a protection switch may trip, preventing the system from operating normally. In the related art, improving a power specification is usually achieved by replacing a conducting wire or a switch. However, this approach may cause a great waste of resources and greatly limit convenience of use.

### SUMMARY

The present disclosure aims to solve at least one of the technical problems in the related art. Therefore, the present disclosure provides a power supply circuit, a power supply device, and a power supply system, which can realize an increased power supply power of the power supply circuit, satisfying a power demand of a load. In this way, convenience of use of the power supply circuit can be improved.

In a first aspect, the present disclosure provides a power supply circuit. The power supply circuit includes: a bus, a first port, a second port, and power ports; a first branch having a first end electrically connected to the bus, and a second end electrically connected to the first port; a second branch having a first end electrically connected to the bus, and a second end electrically connected to the second port; a plurality of third branches, each of the plurality of third branches having a first end electrically connected to the bus, and a second end electrically connected to a corresponding one of the power ports, and each of the plurality of third branches being provided with a first switch; and a control circuit connected to a drive terminal of the first switch of each of the plurality of third branches. The control circuit is configured to control the first switch of each of the plurality of third branches to be turned on or off. Each of the first port and the second port is configured to be connected to a load or an inverter. Each of the power ports is configured to be connected to a power grid or a power source.

According to an embodiment of the present disclosure, a plurality of the power ports are connected to the power grid. The power supply circuit further includes: a plurality of electric quantity measurement units, each of the plurality of electric quantity measurement units being disposed at a corresponding one of the plurality of third branches connected to the power grid, and being configured to detect and record an electric quantity at the corresponding third branch.

According to an embodiment of the present disclosure, each of the electric quantity measurement units includes: a transformer disposed at the corresponding third branch connected to the power grid; and an electricity meter coupled to the transformer.

According to an embodiment of the present disclosure, each of the electric quantity measurement units is disposed between the first switch of the corresponding third branch and the power grid. The power supply circuit further includes: a plurality of second switches, each of the plurality of second switches being disposed at a corresponding one of the plurality of third branches, and located between a corresponding one of the plurality of electric quantity measurement units and the power grid. The control circuit is connected to a drive terminal of each of the plurality of second switches, and the control circuit is configured to control each of the plurality of second switches to be turned on or off.

In a second aspect, the present disclosure provides a power supply device. The power supply device includes the aforementioned power supply circuit.

In a third aspect, the present disclosure provides a power supply system. The power supply system includes an inverter, a load, and the aforementioned power supply circuit. An alternating current side of the inverter is electrically connected to the first port of the power supply circuit. The second port of the power supply circuit is electrically connected to the load.

According to an embodiment of the present disclosure, the power ports include a first power port and a second power port. Each of the first power port and the second power port is electrically connected to a power grid. When a sum of a first limited power and an output power of the inverter is smaller than a load power, both the first switch corresponding to the first power port and the first switch corresponding to the second power port are in an on state.

According to an embodiment of the present disclosure, the power ports include a third power port and a fourth power port. Each of the third power port and the fourth power port is electrically connected to a power source. When a sum of a third limited power and an output power of the inverter is smaller than a load power, both the first switch corresponding to the third power port and the first switch corresponding to the fourth power port are in an on state.

According to an embodiment of the present disclosure, the power ports include a fifth power port and a sixth power port, the fifth power port being electrically connected to a power grid, and the sixth power port being electrically connected to a power source. When a power grid fails, the first switch corresponding to the fifth power port is in an off state, and the first switch corresponding to the sixth power port is in an on state.

According to an embodiment of the present disclosure, the power ports include a seventh power port and an eighth power port. Each of the seventh power port and the eighth power port is electrically connected to a power grid. The third branch corresponding to the seventh power port being provided with a first electric quantity measurement unit, and the third branch corresponding to the eighth power port being provided with a second electric quantity measurement unit. When an output power of the inverter is greater than a load power, the first switch corresponding to the seventh power port is in an on state, and the first electric quantity measurement unit is in operation. Or, when the output power of the inverter is smaller than the load power, the first switch corresponding to the eighth power port is in the on state, and the second electric quantity measurement unit is in operation.

With the power supply circuit, the power supply device, and the power supply system according to various embodiments of the present disclosure, the first switch can connect or disconnect the corresponding third branch, and the power grid or the power source can supply power to the load through the connected third branch. By controlling the plurality of first switches to be turned on, the number of connected third branches can be increased, thereby realizing the increased supply power of the power supply circuit. In this way, the power demand of the load can be met, improving the convenience of use of the power supply circuit.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a first schematic diagram of a power supply circuit according to an embodiment of the present disclosure.
FIG. 2 is a second schematic diagram of a power supply circuit according to an embodiment of the present disclosure.
FIG. 3 is a first schematic diagram of a power supply system according to an embodiment of the present disclosure.
FIG. 4 is a second schematic diagram of a power supply system according to an embodiment of the present disclosure.
FIG. 5 is a second schematic diagram of a power supply system according to an embodiment of the present disclosure.

Reference numerals of the accompanying drawings:
power supply circuit 100; bus 10; first branch 20; second branch 30; third branch 40; control circuit 50; electric quantity measurement unit 60; transformer 61; electricity meter 62; first to second switches K1 to K2; power supply system 200; inverter 210; load 220.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the embodiments of the present disclosure.

In the following description, a "circuit" refers to an electrically conductive loop composed of at least one element or sub-circuit through electrical connection or electromagnetic connection. When a component or a circuit is described as "coupled to" or "connected to" another component, or a component/circuit is said to be "coupled between" or "connected between" two nodes, it can be directly coupled or connected to the other component, or intermediate components may exist. Connection between components can be physical, logical, or a combination of both. Conversely, when the element is said to be "directly coupled to" or "directly connected to" another element, it means that there is no intermediate element between the two nodes.

In the description, terms such as "first" and "second" are used to distinguish between similar objects, rather than to describe a particular order or sequence. It should be understood that numerical descriptors as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of the objects is not limited. For example, one or a plurality of first objects may be provided. In addition, "and/or" throughout the specification and appended claims indicates at least one of the objects associated with "and/or". The character "/" generally indicates that the associated objects before and after the character are in an "or" relationship.

In addition, the description with reference to the terms "one embodiment," "some embodiments," "illustrative embodiments", "an example," "a specific example," or "some examples," etc., means that specific features, structures, materials, or characteristics described in conjunction with the embodiment(s) or example(s) are included in at least one embodiment or example of the present disclosure. The appearances of the above phrases in various places throughout this specification are not necessarily referring to the same embodiment or example. In addition, the particular features, structures, materials, or characteristics described may be combined in any suitable manner in any one or more embodiments or examples.

When a photovoltaic inverter system is connected to a load, a load capacity of the photovoltaic inverter system is usually limited by a hardware port and line properties. When a power required by the connected load exceeds a maximum transmission capacity of the branch circuit where the load is located, a current overload may occur, triggering a protection switch to trip, thereby preventing the entire system from operating normally. In this case, the inverter cannot provide stable power supply to the load, affecting an operating efficiency and reliability of the system.

In the related art, a common practice to solve this problem is to improve a power transmission capability of the branch circuit by replacing a conducting wire with a larger specification or a switch with a higher capacity. A basic principle of this method is to increase a cross-sectional area of the wire or choose a protective switch with a higher load capacity to allow the system to withstand higher power requirements and prevent tripping and overload. However, a great waste of resources may occur, and convenience of use can be greatly limited.

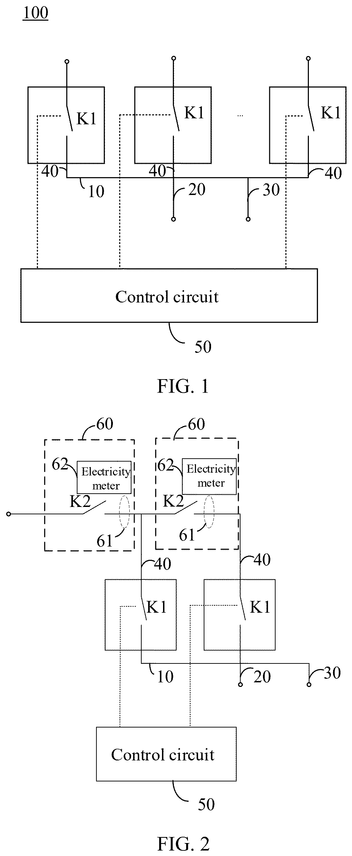

Reference can be made to FIG. 1, which illustrates a power supply circuit 100 according to an embodiment of the present disclosure. An embodiment of the present disclosure provides a power supply circuit 100. The power supply circuit 100 includes a bus 10, a first branch 20, a second branch 30, a plurality of third branches 40, and a control circuit 50. The first branch 20 has a first end electrically connected to the bus 10, and a second end electrically connected to a first port. The second branch 30 has a first end electrically connected to the bus 10, and a second end electrically connected to a second port. Each of the plurality of third branches 40 has a first end electrically connected to the bus 10, and a second end electrically connected to a corresponding one of power ports. Each of the plurality of third branches 40 is provided with a first switch K1. The control circuit 50 is connected to a drive terminal of the first switch K1 of each of the plurality of third branches 40 and is configured to control the first switch K1 of each of the plurality of third branches 40 to be turned on or off. Each of the first port and the second port is configured to be connected to a load or an inverter. Each of the power ports is configured to be connected to a power grid or a power source.

The bus 10 of the power supply circuit 100 is an integrated path of current and voltage, and is responsible for distributing and transmitting electrical energy between various branches. Each of the first end of the first branch 20 and the first end of the second branch 30 is electrically connected to the bus 10. The first branch 20 and the second branch 30 operate in coordination to achieve distribution of power.

Each of the first port and the second port may be electrically connected to the inverter or the load. The devices connected to the first port and the second port may be selected according to actual application scenarios, which is not limited here. Hereinafter, as an example, the first port is configured to be electrically connected to the inverter and the first port is configured to be electrically connected to the load.

The second port is mainly configured to be electrically connected to the load. The first branch 20 may transmit electrical energy from the bus 10 to the second port, thereby realizing power supply to the load. The first port is mainly configured to be electrically connected to the inverter. The second branch 30 may transmit the electrical energy from the bus 10 to the first port or transmit electrical energy generated by the inverter to the bus 10.

Each of the third branches 40 is electrically connected between the bus 10 and the corresponding power port. Each of the power ports may be electrically connected to the power grid or electrically connected to the power source. When the power port is electrically connected to the power grid, the third branch 40 may transmit electrical energy of the power grid to the bus 10 or electrical energy of the bus 10 to the power grid. When the power port is electrically connected to the power source, the third branch 40 may transmit electrical energy generated by the power source to the bus 10. The power source may be a diesel generator, a gasoline generator, or the like.

It should be noted that a number of the third branches 40 may be selected according to actual application scenarios, which is not limited here. For example, two third branches 40, three third branches 40, four third branches 40 may be provided.

The number of the power ports is the same as the number of the third branches 40. An object connected to each of the power ports may also be selected according to actual application scenarios, which is not limited here. For example, three power ports may be provided. Among the power ports, two power ports are electrically connected to the grid and one power port is electrically connected to the power source.

The first switch K1 may be switched between an on state and an off state. Each of the third branches 40 is provided with the first switch K1. When the first switch K1 is turned on, a corresponding third branch 40 is conductive, i.e., an electrical energy transmission path between the power port and the bus 10 is conductive. When the first switch K1 is turned off, a corresponding third branch 40 is disconnected, i.e., an electrical energy transmission path between the power port and the bus 10 is disconnected.

A type of the first switch K1 may be selected according to actual application scenarios, which is not limited here. For example, the first switch K1 may be a relay, an Insulate-Gate Bipolar Transistor (IGBT), a Metal-Oxide-Semiconductor Field-Effect Transistor (MOSFET), or the like.

The control circuit 50 is mainly configured to apply a drive signal to the drive terminal of the first switch K1 to control an operating state of the first switch K1.

When the second port is connected to a high-power load, power supply from a single power port cannot meet a power demand of the load. In this case, a plurality of first switches K1 needs to be turned on.

As an example, three power ports maybe provided. An upper current limit of each of the power ports is 50 A. When a load having a rated current of 80A is connected, the control circuit 50 may control the first switches K1 corresponding to two power ports to be turned on. In this case, the two third branches 40 supply power to the load to meet a power demand of the load.

With the power supply circuit 100 according to the present disclosure, the first switch K1 can connect or disconnect of the corresponding third branch 40, and the power grid or the power source can supply power to the load through the connected third branch 40. By controlling the plurality of first switches K1 to be turned on, the number of the connected third branches 40 can be increased, thereby realizing the increased supply power of the power supply circuit 100. In this way, the power demand of the load can be met, improving convenience of use of the power supply circuit 100.

Reference can be made to FIG. 2, which illustrates the power supply circuit 100 according to an embodiment of the present disclosure. In some embodiments, a plurality of power ports are connected to the power grid. The power supply circuit 100 further includes a plurality of electric quantity measurement units 60. Each of the plurality of electric quantity measurement units 60 is disposed at a corresponding one of the plurality of third branches 40 connected to the power grid, and is configured to detect and record an electric quantity at the corresponding third branch 40.

For each of the power ports, when the power port is connected to the power grid, a power may be fed to the power grid through the power port, and the power may be received from the power grid for transmission to the bus 10. By disposing the electric quantity measurement unit 60 at the corresponding one of the plurality of third branches 40 connected to the power grid, electrical energy fed to the power grid through the bus 10 or electrical energy consumed by the load and the inverter can be detected, realizing more refined electrical energy management.

A specific structure of each of the electric quantity measurement units 60 may be selected according to actual application scenarios, which is not limited here. For example, each of the electric quantity measurement units 60 may include a current sensor or a voltage sensor, a power calculation unit, and a communication module. To ensure data accuracy and real-time performance, these electric quantity measurement units 60 may also include a power factor calculation module, an energy integration module, and a data processing module for efficient energy measurement and management under different loads and environmental conditions. These modules usually automatically perform data calibration and fault detection, ensuring stability and reliability of system operation.

As illustrated in FIG. 2, in some embodiments, each of the electric quantity measurement units 60 includes a transformer 61 and an electricity meter 62. The transformer 61 is disposed at a corresponding one of the plurality of third branches 40 connected to the power grid. The electricity meter 62 is coupled to the transformer 61.

The transformer 61 is disposed at the corresponding one of the plurality of third branches 40 connected to the power grid. The transformer 61 is usually configured to measure an alternating current. By the principle of electromagnetic induction, a high current flowing through the third branch 40 may be converted into a low current signal or a low voltage signal for subsequent measurement and processing.

The electricity meter 62 is coupled to the transformer 61, and receives a signal from the instrument transformer 61 for electric quantity calculation and recording. A main function of the electricity meter 62 is to convert the signal output by the transformer 61 (usually a current signal or a voltage signal) into a numerical value of the electrical energy (such as an active power, a reactive power, total energy, etc.) and to store these data. The electricity meter 62 typically also has digital processing capabilities, enabling accurately sampling, processing, and calculation of the input signal to output real-time electricity data.

The coupling of the instrument transformer 61 to the meter 62 is typically through a transmission interface of current signal or voltage signal. For example, through an analog signal (the current signal, the voltage signal) or a digital signal (such as Modbus, RS485, etc.), measurement data can be transmitted to the electricity meter 62 for further processing and recording. Upon receiving the signal from the transformer 61, the electricity meter 62 may calculate actual electrical energy consumption data according to a set algorithm, and output the data in an appropriate format. An electric quantity supplied to the load by the power grid and an electric quantity fed to the power grid by the inverter may be obtained by data output from the electricity meter 62.

In some embodiments, each of the electric quantity measurement units 60 is disposed between the first switch K1 of a corresponding one of the plurality of third branches 40 and the power grid. The power supply circuit 100 further includes a plurality of second switches K2. Each of the plurality of second switches K2 is disposed at a corresponding one of the plurality of third branches 40, and located between a corresponding one of the plurality of electric quantity measurement units 60 and the power grid. The control circuit 50 is connected to a drive terminal of each of the plurality of second switches K2, and the control circuit 50 is configured to control each of the plurality of second switches K2 to be turned on or off.

A type of the second switch K2 may be selected according to actual application scenarios, which is not limited here. For example, the second switch K 2 may be a relay, an Insulate-Gate Bipolar Transistor (IGBT), a Metal-Oxide-Semiconductor Field-Effect Transistor (MOSFET), or the like.

Each of the plurality of second switches K2 is located between the corresponding one of the plurality of electric quantity measurement units 60 and the power grid. For each of the plurality of second switches K2, when the second switch K2 is turned on, a corresponding electric quantity measurement unit 60 can detect an electric quantity transmitted on the third branch 40 where the second switch K2 is located. When the second switch K2 is turned off, the corresponding electric quantity measurement unit 60 does not operate.

By controlling on and off of each of the second switches K2, an operating state of the corresponding electric quantity measurement unit 60 can be controlled. When a first switch K1 on a predetermined third branch 40 is turned off, the second switch K2 corresponding to this third branch 40 can be controlled to turn off, enabling the corresponding electric quantity measurement unit 60 to not be in operation. Therefore, an electric quantity consumed by an electronic component in the electric quantity measurement unit 60 can be reduced.

An embodiment of the present disclosure provides a power supply device including the aforementioned power supply circuit 100.

Reference can be made to the foregoing embodiments for a specific structure and an operating principle of the power supply circuit100, and details thereof will be omitted here.

With the power supply device according to the present disclosure, the first switch K1 can realize connect or disconnect of the corresponding third branch 40, the power grid or the power source can supply power to the load through the connected third branch 40. By controlling the plurality of first switches K1 to be turned on, a number of the connected third branch 40 can be increased, thereby realizing the increased supply power of the power supply circuit 100. In this way, the power demand of the load can be met, improving convenience of use of the power supply circuit 100.

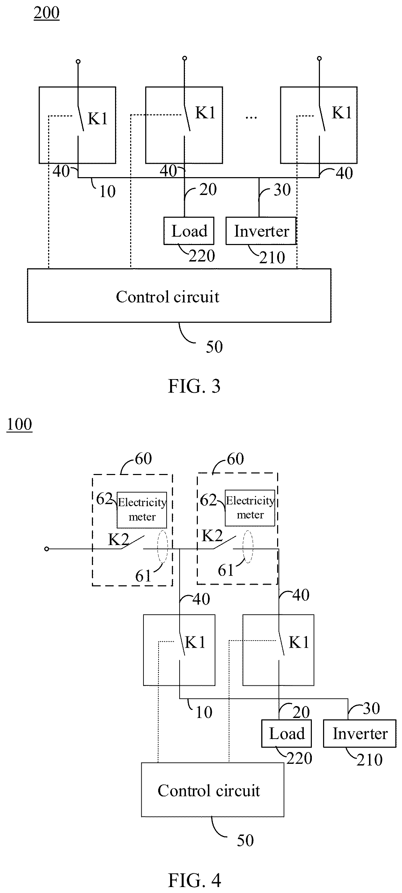

Reference can be made to FIG. 3, which illustrates a power supply system 200 according to an embodiment of the present disclosure. An embodiment of the present disclosure provides a power supply system 200. The power supply system 200 includes an inverter 210, a load 220, and the aforementioned power supply circuit 100. An alternating current side of the inverter 210 is electrically connected to a first port of the power supply circuit 100. A load port of the power supply circuit 100 is electrically connected to the load 220.

A direct current side of the inverter 210 is typically configured for electrical connection with a direct current source. The inverter 210 is mainly configured to invert electrical energy supplied by the direct current source into the alternating current for use by the load 220, or for transmission to the power grid. The load port of the power supply circuit 100 is electrically connected to the load 220. The load port is mainly configured to transmit energy converted by the inverter 210 or energy input from the power port to the load 220 for operation of the load 220.

Reference can be made to the foregoing embodiments for the specific structure and the operating principle of the power supply circuit 100, and details thereof will be omitted here.

With the power supply system 200 according to the present disclosure, the first switch K1 can connect or disconnect the corresponding third branch 40, and the power grid or the power source can supply power to the load 220 through the connected third branch 40. By controlling the plurality of first switches K1 to be turned on, the number of connected third branches 40 can be increased, thereby realizing the increased supply power of the power supply circuit 100. In this way, the power demand of the load 220 can be met, improving the convenience of use of the power supply circuit 100.

In some embodiments, the power ports include a first power port and a second power port that are electrically connected to a power grid. When a sum of a first limited power and an output power of the inverter 210 is smaller than a load power, both the first switch K1 corresponding to the first power port and the first switch K1 corresponding to the second power port are in an on state.

Both the first power port and the second power port are electrically connected to the power grid. The power supply circuit 100 may not only feed energy to the power grid, but also transmit the electrical energy of the power grid to the load 220 or the inverter 210 through the first power port and the second power port.

The first limited power refers to an upper power limit of the first power port, and the load power may be a rated power of the load 220. When the sum of the first limited power and the output power of the inverter 210 is smaller than the load power, it indicates that a power transmitted from the power grid through the first power port and the output power of the inverter 210 are insufficient for normal operation of the load 220. In this case, the first switch K1 corresponding to the first power port and the first switch K1 corresponding to the second power port are in the on state. Power is supplied to the load 220 simultaneously by the inverter 210, the first power port, and the second power port, thereby increasing the supply power of the power supply circuit 100 to meet the power demand of the load 220.

As an example, each of an upper current limit of the first power port and an upper current limit of the second power port is 10 A. An output current of the inverter 210 is 10 A. A rated current of the load 220 is 25 A. A sum of the upper current limit of the first power port and the output current of the inverter 210 is smaller than the rated current of the load 220, i.e., the sum of the first limited power and the output power of the inverter 210 is smaller than the load power. The first switch K1 corresponding to the first power port and the first switch K1 corresponding to the second power port are in the on state. A sum of the output current of the inverter 210, the upper current limit of the first power port, and the upper current limit of the second power port is 30 A, which is greater than the rated current of the load 220. In this case, the power grid supplies power to the load 220 through the first power port and the second power port, and the inverter 210 supplies power to the load 220 by the first port, thereby meeting the power demand of the load 220.

It should be noted that a number of the first power port and a number of the second power port may be selected according to actual application scenarios, which is not limited here. Reference can be made to the foregoing examples for an operating principle of the power supply circuit 100 including a plurality of first power ports and a plurality of second power ports, and details thereof will be omitted here.

As another example, the power ports include two first power ports and three second power ports. The upper current limit of each of the first power ports, and the upper current limit of each of the second power port are 10 A. The output current of the inverter 210 is 10 A. The rated current of the load 220 is 40 A. The sum of the upper current limit of one first power port and the output current of the inverter 210 is smaller than the rated current of the load 220. In this case, the first switches K1 corresponding to two first power ports and the first switch K1 corresponding to one second power port may be controlled to be turned on. In this way, the power output by the two first power ports, the one second power port, and the inverter 210 can meet the power demand of the load 220.

In some embodiments, the power ports include a third power port and a fourth power port, each of the third power port and the fourth power port is electrically connected to a power source. When a sum of a third limited power and an output power of the inverter 210 is smaller than a load power, both the first switch K1 corresponding to the third power port and the first switch K1 corresponding to the fourth power port are in an on state.

Both the third power port and the fourth power port are electrically connected to the power source, indicating that the power supply circuit 100 can absorb electrical energy from the power source through the third power port and the fourth power port.

The third limited power refers to an upper power limit of the third power port. When the sum of the third limited power and the output power of the inverter 210 is smaller than the load power, it indicates that a power transmitted from the power source through the third power port and the output power of the inverter 210 are insufficient for normal operation of the load 220. In this case, both the first switch K1 corresponding to the third power port and the first switch K1 corresponding to the fourth power port are in the on state. Power is supplied to the load 220 simultaneously by the inverter 210, the third power port, and the fourth power port, thereby increasing the supply power of the power supply circuit 100 to meet the power demand of the load 220.

It should be noted that a number of the third power port and a number of the fourth power port may be selected according to actual application scenarios, which is not limited here. Reference can be made to the foregoing examples for an operating principle of the power supply circuit 100 including a plurality of third power ports and a plurality of fourth power ports, and details thereof will be omitted here.

In some embodiments, the power ports include a fifth power port and a sixth power port. The fifth power port is electrically connected to a power grid. The sixth power port is electrically connected to a power source. when the power grid fails, the first switch K1 corresponding to the fifth power port is in an off state, and the first switch K1 corresponding to the sixth power port is in an on state.

The power supply circuit 100 may feed energy to the power grid, and transmit the electrical energy from the power grid to the load 220 or the inverter 210 through the fifth power port. The power supply circuit 100 may absorb the electrical energy from the power source through the sixth power port. When the power grid fails, the first switch K1 corresponding to the fifth power port is in the off state, preventing the power grid side fault from affecting the inverter 210 or the load 220. The first switch K1 corresponding to the sixth power port is in the on state, and the power source supplies power to the load 220 through the sixth power port, thereby meeting the power demand of the load 220 when the power grid fails.

It should be noted that a number of the fifth power port and a number of the sixth power port may be selected according to actual application scenarios, which is not limited here. Reference can be made to the foregoing examples for an operating principle of the power supply circuit 100 including a plurality of fifth power ports and a plurality of sixth power ports, and details thereof will be omitted here.

Reference can be made to FIG. 4, which illustrates a power supply system 200 according to an embodiment of the present disclosure. In some embodiments, the power ports include a seventh power port and an eighth power port, each of the seventh power port and the eighth power port is electrically connected to a power grid. The third branch 40 corresponding to the seventh power port is provided with a first electric quantity measurement unit. The third branch corresponding to the eighth power port is provided with a second electric quantity measurement unit. When an output power of the inverter 210 is greater than a load power, the first switch K1 corresponding to the seventh power port is in an on state, and the first electric quantity measurement unit operates. Alternatively, when the output power of the inverter 210 is smaller than the load power, the first switch K1 corresponding to the eighth power port is in the on state, and the second electric quantity measurement unit operates.

Each of the seventh power port and the eighth power port may feed energy to the power grid and transmit electrical energy from the power grid to the load 220 or the inverter 210. The third branch 40 corresponding to the seventh power port may be a power-selling branch. When the output power of the inverter 210 is greater than the load power, the power supply circuit 100 may transmit an excess power to the power grid through the seventh power port, and the first electric quantity measurement unit may detect an electric quantity transmitted to the power grid. The third branch 40 corresponding to the eighth power port may be a power-purchasing branch. When the output power of the inverter 210 is smaller than the load power, the power supply circuit 100 may transmit the electrical energy of the power grid to the load 220 through the eighth power port, and the second electric quantity measurement unit may detect an electric quantity received from the power grid.

It should be noted that a number of the seventh power port and a number of the eighth power port may be selected according to actual application scenarios, which is not limited here. The power supply system 200 may include one seventh power port and one eighth power port, or may include a plurality of seventh power ports and a plurality of eighth power ports.

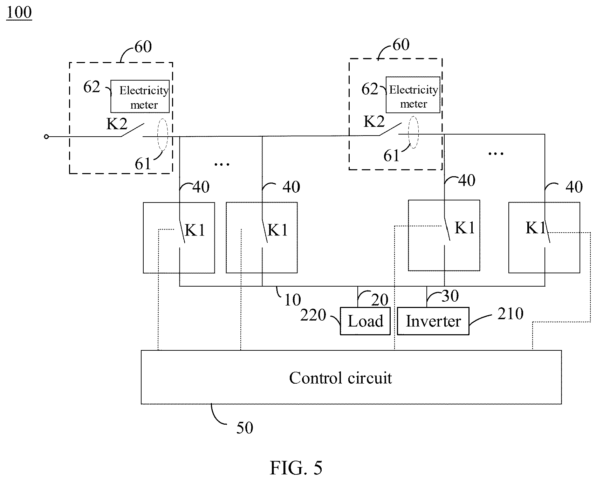

Reference can be made to FIG. 5, which illustrates a power supply system 200 according to an embodiment of the present disclosure. The power supply system 200 includes the plurality of seventh power ports and the plurality of eighth power ports. The plurality of third branches are connected to the seventh power ports or the eighth power ports, respectively. The seventh power ports are connected in series and then connected to the power grid. The eighth power ports are connected in series and then connected to the power grid. A first electric quantity measurement unit is disposed at a connecting line between the seventh power ports and the power grid. The second electric quantity measurement unit is disposed at a connecting line between the eighth power ports and the power grid. Reference can be made to the signed embodiments for a function of the first electric quantity measurement unit and a function of the second electric quantity measurement unit, and details thereof will not be omitted herein. The number of the first switches K1 to be turned on in the third branches corresponding to the seventh power ports and the eighth power ports may be selected according to actual application scenarios, which is not limited here.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A power supply circuit, comprising:
a bus, a first port, a second port and power ports;
a first branch having a first end electrically connected to the bus, and a second end electrically connected to the first port;
a second branch having a first end electrically connected to the bus, and a second end electrically connected to the second port;
a plurality of third branches, each of the plurality of third branches having a first end electrically connected to the bus, and a second end electrically connected to a corresponding one of the power ports, and each of the plurality of third branches being provided with a first switch; and
a control circuit connected to a drive terminal of the first switch of each of the plurality of third branches, the control circuit being configured to control the first switch of each of the plurality of third branches to be turned on or off,
wherein each of the first port and the second port is configured to be connected to a load or an inverter, and each of the power ports is configured to be connected to a power grid or a power source.

2. The power supply circuit according to claim 1, wherein a plurality of power ports among the power ports are connected to the power grid,
wherein the power supply circuit further comprises:
a plurality of electric quantity measurement units, each of the plurality of electric quantity measurement units being disposed at a corresponding one of the plurality of third branches connected to the power grid, and being configured to detect and record an electric quantity at the corresponding third branch.

3. The power supply circuit according to claim 2, wherein each of the electric quantity measurement units comprises:
a transformer disposed at the corresponding third branch connected to the power grid; and
an electricity meter coupled to the transformer.

4. The power supply circuit according to claim 2 or 3, wherein each of the electric quantity measurement units is disposed between the first switch of the corresponding third branch and the power grid,
wherein the power supply circuit further comprises:
a plurality of second switches, each of the plurality of second switches being disposed at a corresponding one of the plurality of third branches, and located between a corresponding one of the plurality of electric quantity measurement units and the power grid, wherein:
the control circuit is connected to a drive terminal of each of the plurality of second switches, and the control circuit is configured to control each of the plurality of second switches to be turned on or off.

5. A power supply device, comprising the power supply circuit according to any one of claims 1 to 4.

6. A power supply system, comprising:
an inverter;
a load; and
the power supply circuit according to any one of claims 1 to 4, wherein an alternating current side of the inverter is electrically connected to the first port of the power supply circuit, and the second port of the power supply circuit is electrically connected to the load.

7. The power supply system according to claim 6, wherein the power ports comprise a first power port and a second power port, each of the first power port and the second power port is electrically connected to the power grid, wherein:
when a sum of a first limited power and an output power of the inverter is smaller than a load power, the first switch corresponding to the first power port and the first switch corresponding to the second power port are in an on state.

8. The power supply system according to claim 6, wherein the power ports comprise a third power port and a fourth power port, each of the third power port and the fourth power port is electrically connected to the power source, wherein:
when a sum of a third limited power and an output power of the inverter is smaller than a load power, the first switch corresponding to the third power port and the first switch corresponding to the fourth power port are in an on state.

9. The power supply system according to claim 6, wherein the power ports comprise a fifth power port and a sixth power port, the fifth power port being electrically connected to the power grid, and the sixth power port being electrically connected to the power source, wherein:
when a power grid fails, the first switch corresponding to the fifth power port is in an off state, and the first switch corresponding to the sixth power port is in an on state.

10. The power supply system according to claim 6, wherein the power ports comprise a seventh power port and an eighth power port, each of the seventh power port and the eighth power port is electrically connected to the power grid, the third branch corresponding to the seventh power port being provided with a first electric quantity measurement unit, and the third branch corresponding to the eighth power port being provided with a second electric quantity measurement unit, wherein:
when an output power of the inverter is greater than a load power, the first switch corresponding to the seventh power port is in an on state, and the first electric quantity measurement unit is in operation; or
when the output power of the inverter is smaller than the load power, the first switch corresponding to the eighth power port is in the on state, and the second electric quantity measurement unit is in operation.
